# EUROPEAN PATENT APPLICATION

(11) **EP 4 765 300 A1**
(43) Date of publication of application: **24.06.2026**
(21) Application number: 25827315.0
(22) Date of filing: 13.06.2025
(51) Int. Cl.: H01M 10/0585, H01M 4/131, H01M 10/052, H01M 10/0583, H01M 50/204, H01M 4/02

(54) **LITHIUM SECONDARY BATTERY, AND BATTERY MODULE AND BATTERY PACK COMPRISING SAME**

(30) Priority: 27.06.2024 KR 20240084840
(71) Applicant: LG Energy Solution, Ltd., Seoul 07335 (KR)
(72) Inventor: KIM, Yeon Kyoung, Daejeon 34122 (KR); AHN, Se Young, Daejeon 34122 (KR); GU, Dae Geun, Daejeon 34122 (KR)
(74) Representative: Hoffmann Eitle
(86) International application number: PCT/KR2025/008113
(87) International publication number: WO 2026/005350

(57) **Abstract**

A lithium secondary battery according to exemplary embodiments includes: a battery case; and an electrode assembly accommodated inside the battery case, wherein the electrode assembly includes a unit cell stack in which n (n is an integer of 2 or more) unit cells including a positive electrode and a negative electrode are arranged in a thickness direction, the unit cell stack includes a first unit cell and a second unit cell, the first unit cell includes a first positive electrode, and a positive electrode active material of the first positive electrode is composed of a first positive electrode active material represented by the following Chemical Formula 1.

[Chemical Formula 1] LiₚFe_{(1-q)}M¹_{q}O₄

In Chemical Formula 1, M¹ is any one of W, Cu, V, Cr, Ti, Zr, Zn, Al, In, Ta, Y, La, Sr, Ga, Sc, Gd, Sm, Ca, Ce, Nb, Mg, B, and Mo, and
p and q are 5≤p≤7 and 0≤q≤0.5, respectively.

## Description

### [Technical Field]

This application claims the benefit of priority from Korean Patent Application No. 10-2024-0084840, filed on June 27, 2024, the entire contents disclosed therein are incorporated by reference into this disclosure.

The present disclosure relates to a lithium secondary battery, and a battery module and a battery pack including the same.

### [Background]

Recently, demand for lithium secondary batteries has been increasing in various fields such as electric vehicles, smartphones, and wearable devices, but there is a continuous need for devices with higher energy within limited space.

In order to increase the electrochemical capacity of lithium secondary batteries, there are methods to improve the performance of positive electrode materials or to minimize the amount of lithium ions consumed by SEI formation generated at the negative electrode.

Meanwhile, various technologies such as pre-lithiation and Li-alloying exist as technologies to compensate for lithium ions consumed in SEI formation, etc., but there are limitations in applying them industrially due to process difficulties. Accordingly, a method of compensating for consumed lithium ions by adding a lithium-based additive as a sacrificial positive electrode material to the positive electrode material has been researched and proposed.

(Patent Document 1) Korean Laid-Open Patent Publication No. 10-2021-00655655

### [Summary]

### [Technical Problem]

The problem to be solved by the technical idea of the present disclosure is to provide a lithium secondary battery with improved initial efficiency and energy density.

### [Technical Solution]

According to exemplary embodiments of the present disclosure for solving the above-described problems, a lithium secondary battery is provided. The lithium secondary battery includes: a battery case; and an electrode assembly accommodated inside the battery case, wherein the electrode assembly includes a unit cell stack in which n (n is an integer of 2 or more) unit cells including a positive electrode and a negative electrode are arranged in a thickness direction, the unit cell stack includes a first unit cell and a second unit cell, the first unit cell includes a first positive electrode, and a positive electrode active material of the first positive electrode is composed of a first positive electrode active material represented by the following Chemical Formula 1.

[Chemical Formula 1] LiₚFe_{(1-q)}M¹_{q}O₄

In Chemical Formula 1, M¹ is any one of W, Cu, V, Cr, Ti, Zr, Zn, Al, In, Ta, Y, La, Sr, Ga, Sc, Gd, Sm, Ca, Ce, Nb, Mg, B, and Mo, and
p and q are 5≤p≤7 and 0≤q≤0.5, respectively.

In exemplary embodiments, the second unit cell includes a second positive electrode, and the second positive electrode may include, as a positive electrode active material, a second positive electrode active material of a different type from the first positive electrode active material.

In exemplary embodiments, the second unit cell includes a second positive electrode, and the second positive electrode may include, as a positive electrode active material, lithium iron phosphate having an olivine structure containing an iron element.

In exemplary embodiments, the second positive electrode does not include the first positive electrode active material as a positive electrode active material.

In exemplary embodiments, the first unit cell may be disposed at a center based on a thickness direction (Z direction) in the unit cell stack.

In exemplary embodiments, in Chemical Formula 1, M¹ may be any one of Ti, Zr, Al, Y, Sc, Nb, and Mg, and p and q may be 5.5≤p≤6.5 and 0≤q≤0.2, respectively.

In exemplary embodiments, the first unit cell and/or the second unit cell may be any one of a mono-cell having a separator/negative electrode/separator/positive electrode structure, a bi-cell having a separator/negative electrode/separator/positive electrode/separator/negative electrode structure, and a bi-cell having a separator/positive electrode/separator/negative electrode/separator/positive electrode structure.

In exemplary embodiments, the electrode assembly may further include a half-cell having a separator/negative electrode/separator structure or a half-cell having a separator/positive electrode/separator structure.

In exemplary embodiments, the half-cell may be disposed at an outermost side based on a thickness direction (Z direction) of the electrode assembly.

In exemplary embodiments, in the unit cell stack, a ratio of the number of the first unit cells to a total number of unit cells may be 20% or less.

In exemplary embodiments, in the unit cell stack, a ratio of a thickness of the first unit cell to a total thickness of the unit cell stack may be 20% or less.

In exemplary embodiments, the first unit cell may be disposed at each of a lower portion, a center, and an upper portion based on a thickness direction (Z direction) in the unit cell stack.

In exemplary embodiments, the electrode assembly may be any one of a stack type, a stack and folding type, and a lamination and stack type.

According to other embodiments of the present disclosure, a battery module including the lithium secondary battery is provided.

According to still other embodiments of the present disclosure, a battery pack including the lithium secondary battery is provided.

### [Advantageous Effects]

According to exemplary embodiments of the present disclosure, by changing the configuration method of the electrode assembly, there is an effect of improving the capacity and energy density of the battery while initial efficiency is excellent.

The technical effects that can be obtained in exemplary embodiments of the present disclosure are not limited to the above-described effects, and other effects not mentioned can be clearly derived and understood by a person skilled in the art from the description below. In other words, unintended effects of implementing the exemplary embodiments of the present disclosure may also be derived from the exemplary embodiments of the present disclosure by a person skilled in the art.

### [Brief Description of the Drawings]

FIG. 1 is an exploded perspective view of a lithium secondary battery according to exemplary embodiments.
FIG. 2 is a cross-sectional view of an electrode assembly according to exemplary embodiments.
FIG. 3 is a cross-sectional view of a first unit cell according to exemplary embodiments.
FIG. 4 is a cross-sectional view of a second unit cell according to exemplary embodiments.
FIG. 5 is a cross-sectional view of an electrode assembly according to other embodiments.
FIG. 6 is a cross-sectional view of an electrode assembly according to other embodiments.

### [Description of Reference Numerals]

100: lithium secondary battery
110, 210, 310: electrode assembly
120: battery case
UCS: unit cell stack
UC1: first unit cell
UC2: second unit cell
HC: half-cell
130: electrode tab
140: electrode lead
150: lead film
111, 111': positive electrode
112: separator
113: negative electrode

### [Detailed Description]

Hereinafter, the present disclosure will be described in more detail to assist understanding of the present disclosure.

The terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their invention in the best way.

The terms used in the present specification are used merely to describe exemplary embodiments and are not intended to limit the present disclosure. Expressions in the singular include the plural unless the context clearly indicates otherwise.

The terms "comprise," "include," or "have" used herein designate the presence of features, numbers, steps, components, or combinations thereof described in the specification, and it should be understood that the possibility of the presence or addition of one or more other features, numbers, steps, components, or combinations thereof is not excluded in advance.

In the present specification, the term ^{┌}combination(s) thereof_{┘} included in a Markush-type expression means one or more mixtures or combinations selected from the group consisting of the components described in the Markush-type expression, and means including one or more selected from the group consisting of the components.

In the present specification, the description ^{┌}A and/or B_{┘} means ^{┌}A or B or both_{┘}.

In the present specification, "%" means wt.% unless explicitly indicated otherwise.

In the present specification, a first positive electrode is defined as a positive electrode included in a first unit cell, and a second positive electrode is defined as a positive electrode included in a second unit cell.

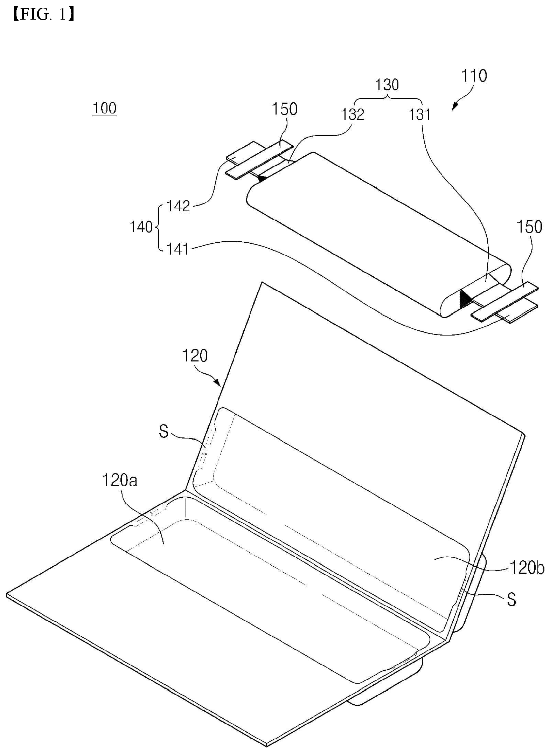

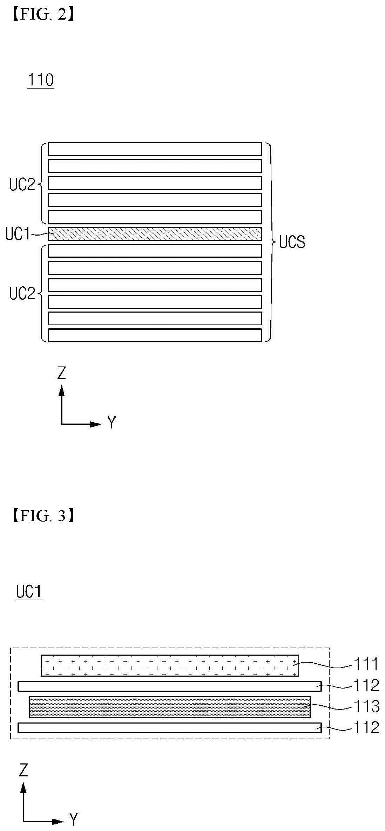

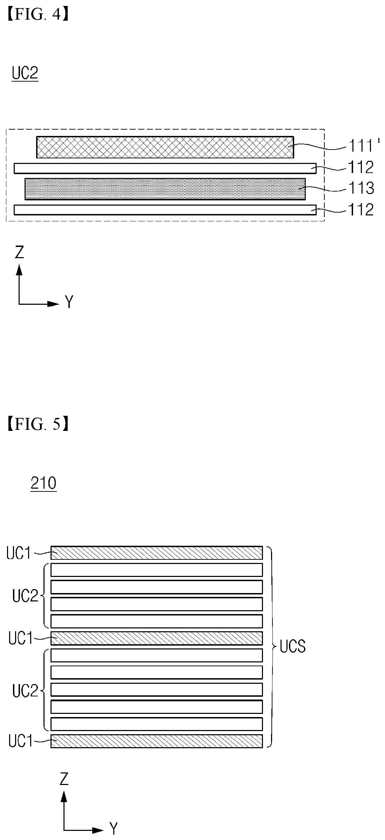

FIG. 1 is an exploded perspective view of a lithium secondary battery according to exemplary embodiments. FIG. 2 is a cross-sectional view of an electrode assembly according to exemplary embodiments. FIG. 3 is a cross-sectional view of a first unit cell according to exemplary embodiments. FIG. 4 is a cross-sectional view of a second unit cell according to exemplary embodiments.

Referring to FIG. 1, a lithium secondary battery 100 according to exemplary embodiments includes a battery case 120; and an electrode assembly 110, and the electrode assembly 110 is accommodated inside accommodation parts 120a, 120b of the battery case. In exemplary embodiments, the lithium secondary battery 100 may be manufactured through a process of accommodating the electrode assembly 110 in the battery case 120, injecting an electrolyte (not shown), and then sealing.

In exemplary embodiments, the electrode assembly 110 may be any one of a stack type, a stack and folding type, and a lamination and stack type. The stack type electrode assembly is an electrode assembly having a structure in which unit cells are stacked by a predetermined quantity, or a positive electrode, a separator, and a negative electrode are repeatedly stacked one by one. The stack and folding type electrode assembly is an electrode assembly having a structure in which unit cells are placed side by side on a folding separator and then folded from one side. The lamination and stack type electrode assembly is an electrode assembly having a structure in which unit cells in which a separator and an electrode are bonded are stacked by a predetermined quantity.

Referring to FIG. 2, an electrode assembly 110 according to exemplary embodiments includes a unit cell stack UCS. The unit cell stack UCS has a structure in which a plurality of unit cells UC1, UC2 are stacked in a thickness direction (Z direction). The unit cells UC1, UC2 may have a structure in which they are simply stacked, or the unit cells are sequentially folded and stacked by a folding separator (not shown).

Referring to FIG. 2, a unit cell stack UCS according to exemplary embodiments includes a first unit cell UC1 and a second unit cell UC2. The unit cell stack UCS may have a structure in which the first and second unit cells UC1, UC2 are arranged in a thickness direction (Z direction). Referring to FIG. 3, the first unit cell UC1 may include a first positive electrode 111, a negative electrode 113, and a separator 112. Referring to FIG. 4, the second unit cell UC2 may include a second positive electrode 111', a negative electrode 113, and a separator 112. The unit cell stack UCS may have a form in which n (n is an integer of 2 or more) first and second unit cells UC1, UC2 are arranged in a thickness direction.

According to exemplary embodiments, at least one unit cell in the unit cell stack UCS is a first unit cell UC1. The first unit cell UC1 includes a first positive electrode 111, and a positive electrode active material of the first positive electrode 111 is composed of a first positive electrode active material represented by the following Chemical Formula 1.

[Chemical Formula 1] LiₚFe_{(1-q)}M¹_{q}O₄

In Chemical Formula 1, M¹ is any one of W, Cu, V, Cr, Ti, Zr, Zn, Al, In, Ta, Y, La, Sr, Ga, Sc, Gd, Sm, Ca, Ce, Nb, Mg, B, and Mo, and
p and q are 5≤p≤7 and 0≤q≤0.5, respectively.

In exemplary embodiments, M¹ in Chemical Formula 1 may be any one of Ti, Zr, Al, Y, Sc, Nb, and Mg. The first positive electrode active material partially doped with the metal of M¹ is preferable because a lattice structure is stabilized to minimize degradation due to repeated charge-discharge.

The first positive electrode active material represented by Chemical Formula 1 may include any one or two or more of Li₅FeO₄, Li₆FeO₄, Li₆Fe_{0.8}Mg_{0.2}O₄, Li_{5.5}Fe_{0.9}Al_{0.1}O₄, Li₆Fe_{0.7}Ti_{0.3}O₄.

In exemplary embodiments, p and q in Chemical Formula 1 may be in ranges of 5.5≤p≤6.5 and 0≤q≤0.2, respectively. When p and q are within the above ranges, it is preferable because the risk of electrolyte decomposition can be reduced.

The positive electrode active material of Chemical Formula 1 is known to have a theoretical charge capacity of about 700 mAh/g and a theoretical discharge capacity of about 40 mAh/g. Therefore, during initial charging, lithium ions are released in a larger amount than general positive electrode materials, and thereafter, during discharging, the positive electrode active material has an irreversible characteristic, so that it can compensate for irreversible capacity loss of the negative electrode. Accordingly, in the related art, a small amount of the compound of Chemical Formula 1 was added to the positive electrode for the purpose of increasing the capacity of the positive electrode and improving the initial efficiency of the battery.

In the case of a battery including a positive electrode in which the compound of Chemical Formula 1 is added in a small amount at a level of 2 to 3 wt.% as a positive electrode active material, measured values of charge capacity and discharge capacity are smaller than a theoretical charge capacity value and a theoretical discharge capacity value, respectively. The inventors of the present disclosure have found that in the case of a battery including a positive electrode in which the compound of Chemical Formula 1 is applied at 100% as a positive electrode active material, measured values of charge capacity and discharge capacity are the same as or similar to a theoretical charge capacity value and a theoretical discharge capacity value, respectively. When the compound of Chemical Formula 1 is mixed with a positive electrode active material of a different type, a capacity expression rate of the compound of Chemical Formula 1 is significantly decreased, but when 100% of the positive electrode active material is the compound of Chemical Formula 1, 100% capacity is expressed.

Accordingly, by preparing a first unit cell UC1 including a first positive electrode 111 to which the positive electrode active material of Chemical Formula 1 is applied at 100%, and allowing at least one of the first unit cells UC1 to be included in the unit cell stack UCS, the present disclosure has been achieved, which has effects according to the use of the positive electrode active material of Chemical Formula 1, that is, increased positive electrode capacity, increased energy density of the battery, and increased initial efficiency. The battery according to the present disclosure has superior initial capacity and initial efficiency, when it is assumed that a total weight of the first positive electrode active material represented by Chemical Formula 1 in the unit cell stack is the same, compared to a battery in which all positive electrodes of the unit cells include the first positive electrode active material represented by Chemical Formula 1 as a positive electrode active material within a predetermined range. In addition, the present disclosure can maximize the capacity expression rate of the first positive electrode active material represented by Chemical Formula 1, so that the content of the first positive electrode active material can be lowered accordingly, and the content of the positive electrode active material implementing high energy density can be increased. Therefore, the lithium secondary battery according to the present disclosure has an effect of increasing the energy density of the battery by a method of changing the configuration method of the electrode assembly.

It is sufficient that the unit cell stack UCS includes at least one of the first unit cells UC1. The unit cell stack UCS may include one first unit cell, or may include two first unit cells, or may include three first unit cells. Since the first unit cell UC1 mainly provides lithium ions to the second unit cell UC2 during initial charging and serves to compensate for irreversible lithium loss of the negative electrode, it is sufficient if the first unit cell UC1 is included in a predetermined number in the unit cell stack UCS.

If the unit cell stack UCS is composed only of the first unit cells UC1, it may be degraded due to repeated charge-discharge due to material characteristics of the positive electrode active material of Chemical Formula 1. Therefore, the first unit cell UC1 may be included in a range of 20% or less, preferably 15% or less, more preferably 0.5 to 10%, and most preferably 1 to 7% with respect to a total number of unit cells included in the unit cell stack. When the number ratio of the first unit cells UC1 is within the above range, it is possible to implement a battery having excellent initial capacity and initial efficiency while preventing side effects due to degradation of the first unit cells. In addition, in the unit cell stack, a ratio of a thickness of the first unit cell to a total thickness of the unit cell stack may be 20% or less, preferably 15% or less, more preferably 0.5 to 10%, and most preferably 1 to 7%. Here, the thickness of the first unit cell means a total thickness of the first unit cells when the number of the first unit cells is plural. When the thickness ratio of the first unit cell is within the above range, it is possible to implement a battery having high energy density and excellent initial capacity and initial efficiency.

Referring to FIG. 3, the first unit cell UC1 includes a first positive electrode 111, a negative electrode 113, and a separator 112, and may have a structure in which the separator 112 is interposed between the positive electrode 111 and the negative electrode 113.

The first positive electrode 111 may be manufactured by, for example, coating a first positive electrode slurry on a positive electrode current collector, and then drying and rolling.

The first positive electrode slurry includes the first positive electrode active material and a positive electrode binder, and may further include one or two or more of a positive electrode conductive material, a dispersant, and other additives.

The first positive electrode active material is as described above.

The positive electrode binder serves to bind the positive electrode active material, the positive electrode additive, and the conductive material to each other, and may be used without particular limitation as long as it has such a function. Specifically, the binder may include one or more resins selected from the group consisting of polyvinylidenefluoride-hexafluoropropylene copolymer (PVdF-co-HFP), polyvinylidenefluoride (PVdF), polyacrylonitrile, polymethylmethacrylate, and copolymers thereof. As an example, the binder may include polyvinylidenefluoride.

In addition, the binder may be included in an amount of 1 to 10 parts by weight based on the weight of the positive electrode active material layer, and specifically, 2 to 8 parts by weight; or 1 to 5 parts by weight.

The positive electrode conductive material is used to improve electrical performance of the positive electrode, and materials commonly used in the art may be applied, but specifically, the positive electrode conductive material may include one or more selected from the group consisting of natural graphite, artificial graphite, carbon black, acetylene black, Denka black, ketjen black, Super-P, channel black, furnace black, lamp black, thermal black, graphene, and carbon nanotube.

In addition, the positive electrode conductive material may be included in an amount of 0.1 to 10 parts by weight based on the weight of the positive electrode active material layer, and specifically, 0.1 to 5 parts by weight; 0.5 to 4 parts by weight; 1.5 to 5 parts by weight; 1 to 3 parts by weight; 0.1 to 2 parts by weight; or 0.1 to 1 part by weight.

The positive electrode current collector is not particularly limited as long as it has conductivity without causing chemical changes in the battery, and for example, stainless steel, aluminum, nickel, titanium, calcined carbon, or a material surface-treated with carbon, nickel, titanium, silver, or the like on a surface of aluminum or stainless steel may be used. In addition, the positive electrode current collector may typically have a thickness of 3 to 500 µm, and adhesion of the positive electrode active material may be enhanced by forming fine irregularities on the surface of the current collector. For example, it may be used in various forms such as a film, a sheet, a foil, a net, a porous body, a foam, and a non-woven fabric.

The negative electrode 113 may be manufactured by, for example, coating a negative electrode slurry on a negative electrode current collector, and then drying and rolling.

The negative electrode slurry includes a negative electrode active material and a negative electrode binder, and may further include one or two or more of a negative electrode conductive material, a dispersant, and other additives.

The negative electrode active material is not particularly limited, and a compound capable of reversible intercalation and deintercalation of lithium may be generally used. Specific examples include carbonaceous materials such as artificial graphite, natural graphite, graphitized carbon fiber, amorphous carbon, and highly crystalline carbon; metallic compounds capable of alloying with lithium, such as Si, Al, Sn, Pb, Zn, Bi, In, Mg, Ga, Cd, Si alloy, Sn alloy, or Al alloy; or composites including metallic compounds and carbonaceous materials. In addition, examples of low crystallinity carbon include soft carbon and hard carbon, and examples of high crystallinity carbon include high-temperature calcined carbons such as natural graphite, kish graphite, pyrolytic carbon, mesophase pitch based carbon fiber, meso-carbon microbeads, mesophase pitches, and petroleum or coal tar pitch derived cokes. One of these may be used alone or a mixture of two or more thereof may be used, and a metal lithium thin film may also be used as the negative electrode active material.

The negative electrode binder serves to improve adhesion between negative electrode active material particles and adhesion between the negative electrode active material and the negative electrode current collector. Specific examples include polyvinylidenefluoride (PVDF), vinylidenefluoride-hexafluoropropylene copolymer (PVDF-co-HFP), polyvinylalcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluoro rubber, or various copolymers thereof, and one of these may be used alone or a mixture of two or more thereof may be used. The negative electrode binder may be included in an amount of 1 to 30 wt.%, specifically 1 to 20 wt.%, and more specifically 1 to 10 wt.% based on the total weight of the negative electrode active material layer.

The negative electrode conductive material is used to impart conductivity to the electrode, and may be used without particular limitation as long as it does not cause chemical changes in the battery and has electronic conductivity. Specific examples include graphite such as natural graphite or artificial graphite; carbon-based materials such as carbon black, acetylene black, ketjen black, channel black, furnace black, lamp black, thermal black, carbon fiber, and carbon nanotube; metal powders or metal fibers such as copper, nickel, aluminum, and silver; conductive whiskers such as zinc oxide and potassium titanate; conductive metal oxides such as titanium oxide; or conductive polymers such as polyphenylene derivatives, and one of these may be used alone or a mixture of two or more thereof may be used. The negative electrode conductive material may typically be included in an amount of 1 to 30 wt.%, specifically 1 to 20 wt.%, and more specifically 1 to 10 wt.% based on the total weight of the negative electrode active material layer.

Meanwhile, the negative electrode current collector is not particularly limited as long as it has high conductivity without causing chemical changes in the battery, and for example, copper, stainless steel, aluminum, nickel, titanium, calcined carbon, a material surface-treated with carbon, nickel, titanium, silver, or the like on a surface of copper or stainless steel, aluminum-cadmium alloy, or the like may be used.

In addition, the negative electrode current collector may typically have a thickness of 3 µm to 500 µm, and similar to the positive electrode current collector, adhesion of the negative electrode active material may be enhanced by forming fine irregularities on the surface of the negative electrode current collector. For example, it may be used in various forms such as a film, a sheet, a foil, a net, a porous body, a foam, and a non-woven fabric.

The separator 112 may be any porous base substrate used as a separator in lithium secondary batteries, and for example, a polyolefin-based porous membrane or a non-woven fabric may be used, but is not particularly limited thereto. In particular, it is preferable that the separator has low resistance to ion movement of the electrolyte and excellent electrolyte retention capability.

Examples of the polyolefin-based porous membrane include membranes formed from polyolefin-based polymers such as polyethylene such as high-density polyethylene, linear low-density polyethylene, low-density polyethylene, and ultra-high molecular weight polyethylene, polypropylene, polybutylene, and polypentene, each alone or as a mixture thereof.

Examples of the non-woven fabric include, in addition to polyolefin-based non-woven fabrics, non-woven fabrics formed from polymers such as polyethyleneterephthalate, polybutyleneterephthalate, polyester, polyacetal, polyamide, polycarbonate, polyimide, polyetheretherketone, polyethersulfone, polyphenyleneoxide, polyphenylenesulfide, and polyethylenenaphthalene, each alone or as a mixture thereof. The structure of the non-woven fabric may be a spunbond non-woven fabric or a melt-blown non-woven fabric composed of long fibers.

The thickness of the porous base substrate is not particularly limited, but may be 5 to 50 µm, and a pore size and porosity present in the porous base substrate are also not particularly limited, but may be 0.01 to 50 µm and 10 to 95%, respectively.

Meanwhile, in order to improve mechanical strength of the separator composed of the porous base substrate and suppress a short circuit between the positive electrode and the negative electrode, a porous coating layer including inorganic particles and a binder polymer may be further included on at least one surface of the porous base substrate.

As described above, the first unit cell serves to sufficiently provide lithium ions to a second unit cell, which will be described later, during charging, and serves to compensate for irreversible capacity during discharging. As described above, the lithium secondary battery according to the present disclosure has an effect of increasing the energy density of the battery by a method of changing the configuration method of the electrode assembly.

Referring to FIG. 2, the unit cell stack UCS further includes a second unit cell UC2 in addition to the first unit cell UC1. The second unit cell UC2 includes a second positive electrode 111', and the second positive electrode 111' includes, as a positive electrode active material, a second positive electrode active material of a different type from the first positive electrode active material. Since the first positive electrode active material is rich in lithium but has low irreversibility of lithium ions, the first positive electrode of the first unit cell rapidly decreases in capacity due to repeated charge-discharge. Since the electrode assembly according to the present disclosure includes the second unit cell UC2 in addition to the first unit cell UC1, it can have the capacity and capacity retention rate required for secondary batteries.

In exemplary embodiments, when the unit cell stack UCS includes a plurality of second unit cells UC2, each positive electrode, each negative electrode, and each separator of the second unit cells UC2 may have the same material and the same composition.

The second unit cell UC2 includes a second positive electrode 111', a negative electrode 113, and a separator 112, and may have a structure in which the separator 112 is interposed between the second positive electrode 111' and the negative electrode 113.

In exemplary embodiments, the second unit cell UC2 does not include the first positive electrode active material as a positive electrode active material of the second positive electrode 111'. As seen above, when the first positive electrode active material is mixed with a positive electrode active material of a different type, the capacity expression rate decreases, so it is preferable that the second positive electrode 111' of the second unit cell UC2 does not include the first positive electrode active material as a positive electrode active material.

In exemplary embodiments, the second positive electrode active material is not particularly limited in type as long as it is of a different type from the first positive electrode active material. That is, as the second positive electrode active material, a compound known in the art may be used as a compound capable of reversible intercalation and deintercalation of lithium.

In exemplary embodiments, the second positive electrode active material may be one or two or more selected from the group consisting of a layered compound such as lithium cobalt oxide (LiCoO₂) or lithium nickel oxide (LiNiO₂), or a compound substituted with one or more transition metals; lithium manganese oxides such as Li₁₊ₓMn₂₋ₓO₄ (wherein x is 0 to 0.33), LiMnO₃, LiMn₂O₃, or LiMnO₂; lithium copper oxide (Li₂CuO₂); vanadium oxides such as LiV₃O₈, LiV₃O₄, V₂O₅, or Cu₂V₂O₇; Ni site-type lithium nickel oxide represented by the formula LiNi₁₋ₓMₓO₂ (wherein M = Co, Mn, Al, Cu, Fe, Mg, B, or Ga, and x = 0.01 to 0.3); lithium manganese composite oxide represented by the formula LiMn₂₋ₓMₓO₂ (wherein M = Co, Ni, Fe, Cr, Zn, or Ta, and x = 0.01 to 0.1) or Li₂Mn₃MO₈ (wherein M = Fe, Co, Ni, Cu, or Zn); lithium manganese composite oxide having a spinel structure represented by LiNiₓMn₂₋ₓO₄; LiMn₂O₄ in which part of Li in the formula is substituted with an alkaline earth metal ion; disulfide compounds; lithium iron phosphate represented by LiFePO₄; or Fe₂(MoO₄)₃.

Since the first positive electrode active material contains an iron element, it is preferable that the second positive electrode active material includes lithium iron phosphate having an olivine structure containing an iron element in terms of maximizing the efficiency of the present disclosure.

In exemplary embodiments, the lithium iron phosphate having an olivine structure may be a compound represented by the following Chemical Formula 2.

[Chemical Formula 2] LiFeₓM²_{y}PO₄

In Chemical Formula 2, M² is one or more of Ni, Co, Mn, W, Cu, V, Cr, Ti, Zr, Zn, Al, In, Ta, Y, La, Sr, Ga, Sc, Gd, Sm, Ca, Ce, Nb, Mg, B, and Mo,
x is 1-y, and y is 0≤y≤0.8.

In exemplary embodiments, the lithium nickel oxide may be a lithium transition metal oxide having a high Ni content represented by the following Chemical Formula 3. The lithium transition metal oxide represented by the following Chemical Formula 3 is preferable in terms of increasing energy density.

[Chemical Formula 3] Li₁₊ₓNiₐCo_{b}Mn_{c}M_{1-(a+b+c)}O_{2-y}A_{y}

In the above formula,
M is at least one selected from the group consisting of Cu, Ti, Mg, Al, Pt, and Zr,
A is an oxygen-substituted halogen,
and 0≤x≤0.5, 0.8≤a≤1, 0≤b≤0.2, 0≤c≤0.2, 0.9≤a+b+c≤1, and 0≤y≤0.001.

Detailed descriptions of the negative electrode and the separator included in the second unit cell UC2 are the same as those of the negative electrode and the separator included in the first unit cell, and thus redundant descriptions are omitted.

Referring to FIG. 2, the first unit cell UC1 may be disposed at a center based on a thickness direction (Z direction) in the unit cell stack UCS. An electrode tab of a unit cell disposed at the center of the unit cell stack has a shorter length compared to an electrode tab of a unit cell disposed at an outermost side in the thickness direction of the unit cell stack, and since the first unit cell serves to sufficiently provide lithium ions to the second unit cell, when the first unit cell is disposed at the center, an effect of increasing the energy density of the battery can be further maximized.

FIG. 5 is a cross-sectional view of an electrode assembly according to other embodiments.

Referring to FIG. 5, the first unit cell UC1 may be disposed at each of a lower portion, a center, and an upper portion based on a thickness direction (Z direction) in the unit cell stack UCS. Since the first unit cell serves to sufficiently provide lithium ions to the second unit cell, when the first unit cells are evenly disposed at the lower portion, the center, and the upper portion, there is an advantage of reducing variation in the amount of lithium ions provided according to variation in the position in the thickness direction of the second unit cell.

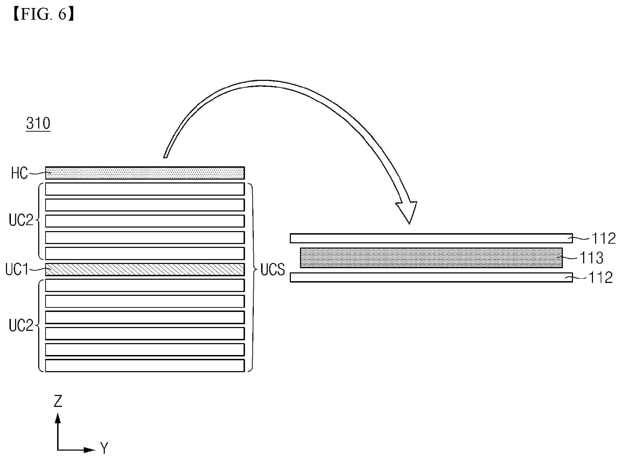

FIG. 6 is a cross-sectional view of an electrode assembly according to other embodiments.

Referring to FIG. 6, an electrode assembly 310 may further include a half-cell HC having a separator 112/negative electrode 113/separator 112 structure. However, the structure of the half-cell is not limited thereto, and the half-cell may have a separator/positive electrode/separator structure. The half-cell HC may be disposed at the outermost side based on a thickness direction (Z direction) of the electrode assembly 310.

Hereinafter, the electrolyte included in the lithium secondary battery of the present disclosure will be described in detail.

In exemplary embodiments, the electrolyte may include an organic solvent and a lithium salt commonly used, and is not particularly limited.

As the organic solvent, any solvent capable of serving as a medium through which ions involved in the electrochemical reaction of the battery can move may be used without particular limitation. Specifically, as the organic solvent, ester-based solvents such as methyl acetate, ethyl acetate, γ-butyrolactone, and ε-caprolactone; ether-based solvents such as dibutyl ether or tetrahydrofuran; ketone-based solvents such as cyclohexanone; aromatic hydrocarbon-based solvents such as benzene and fluorobenzene; carbonate-based solvents such as dimethylcarbonate (DMC), diethylcarbonate (DEC), methylethylcarbonate (MEC), ethylmethylcarbonate (EMC), ethylene carbonate (EC), and propylene carbonate (PC) may be used.

Among these, carbonate-based solvents are preferable, and a mixture of a cyclic carbonate (for example, ethylene carbonate or propylene carbonate) having high ionic conductivity and high dielectric constant capable of improving charge-discharge performance of the battery and a low-viscosity linear carbonate-based compound (for example, ethyl methyl carbonate, dimethyl carbonate, or diethyl carbonate) is more preferable.

The lithium salt may be used without particular limitation as long as it is a compound capable of providing lithium ions used in lithium secondary batteries. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, Lil, or LiB(C₂O₄)₂. It is preferable that the lithium salt is included in the electrolyte at a concentration of approximately 0.6 mol% to 2 mol%.

In addition to the electrolyte components, the electrolyte may further include one or more additives such as pyridine, triethyl phosphite, triethanolamine, cyclic ether, ethylene diamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, or aluminum trichloride for the purpose of improving battery life characteristics, suppressing battery capacity reduction, improving battery discharge capacity, and the like. In this case, the additive may be included in an amount of 0.1 to 5 wt.% based on the total weight of the electrolyte.

Unlike the lithium secondary battery described above, the lithium secondary battery according to another embodiment of the present disclosure may be an all-solid-state battery.

The battery case may be one commonly used in the art, and there is no limitation on the appearance according to the use of the battery, and for example, it may be a cylindrical type using a can, a prismatic type, a pouch type, or a coin type.

Meanwhile, the present disclosure provides a battery module and a battery pack including the secondary battery described above in one embodiment as a unit battery.

The battery pack may be used as a power source for medium- and large-sized devices requiring high-temperature stability, long cycle characteristics, and high rate characteristics, and specific examples of such medium- and large-sized devices include power tools that are powered by electric motors; electric vehicles including electric vehicles (EV), hybrid electric vehicles (HEV), plug-in hybrid electric vehicles (PHEV), and the like; electric two-wheeled vehicles including E-bikes and E-scooters; electric golf carts; energy storage systems, and the like, and more specifically, hybrid electric vehicles (HEV), but are not limited thereto.

Hereinafter, the present disclosure will be described in more detail by way of examples. However, the following examples are for illustrating the present disclosure, and the scope of the present disclosure is not limited thereto.

### Example 1

### (Manufacturing of First Unit Cell)

A positive electrode slurry was prepared by mixing and stirring Li₅FeO₄ as a first positive electrode active material, polyvinylidenefluoride (PVdF) as a binder, and carbon black as a conductive material in a weight ratio of 94:3:3 in N-methylpyrrolidone. The positive electrode slurry was coated on an aluminum foil, and dried and rolled to manufacture a first positive electrode.

A negative electrode slurry was prepared by mixing and stirring artificial graphite (particle diameter: 20 µm) as a negative electrode active material, styrene butadiene rubber (SBR) as a binder, and carbon black as a conductive material in a weight ratio of 90:5:5 in water. The negative electrode slurry was coated on a copper foil, and dried and rolled to manufacture a negative electrode.

A polyethylene porous separator (thickness 20 µm) was prepared, and the separator/the first positive electrode/the separator/the negative electrode were sequentially stacked to manufacture a first unit cell.

### (Manufacturing of Second Unit Cell)

A positive electrode slurry was prepared by mixing and stirring LiFePO₄ as a second positive electrode active material, polyvinylidenefluoride (PVdF) as a binder, and carbon black as a conductive material in a weight ratio of 94:3:3 in N-methylpyrrolidone. The positive electrode slurry was coated on an aluminum foil, and dried and rolled to manufacture a second positive electrode.

A negative electrode slurry was prepared by mixing and stirring artificial graphite (particle diameter: 20 µm) as a negative electrode active material, styrene butadiene rubber (SBR) as a binder, and carbon black as a conductive material in a weight ratio of 90:5:5 in water. The negative electrode slurry was coated on a copper foil, and dried and rolled to manufacture a negative electrode.

The separator/the second positive electrode/the separator/the negative electrode were sequentially stacked to manufacture a second unit cell.

### (Manufacturing of Battery)

One first unit cell and 19 second unit cells were prepared, the first unit cell was disposed at the bottom, and 19 second unit cells were stacked thereon in a thickness direction to manufacture an electrode assembly.

The electrode assembly was accommodated in a pouch-type battery case, an electrolyte solution was injected, and then the pouch-type battery case was sealed to complete the manufacture of a battery.

### Example 2

A battery was manufactured in the same manner as in Example 1, except that in the manufacture of the battery in Example 1, the first unit cell was disposed at the 10th position from the bottom.

### Comparative Example

### (Manufacturing of Unit Cell)

A positive electrode slurry was prepared by using a mixture in which LiFePO₄ and Li₅FeO₄ were mixed in a weight ratio of 95:5 as a positive electrode active material, and mixing and stirring polyvinylidenefluoride (PVdF) as a binder and carbon black as a conductive material in N-methylpyrrolidone. At this time, among the solid content of the positive electrode slurry, the positive electrode active material, the binder, and the conductive material were in a weight ratio of 94:3:3. The positive electrode slurry was coated on an aluminum foil, and dried and rolled to manufacture a positive electrode.

A negative electrode slurry was prepared by mixing and stirring artificial graphite (particle diameter: 20 µm) as a negative electrode active material, styrene butadiene rubber (SBR) as a binder, and carbon black as a conductive material in a weight ratio of 90:5:5 in water. The negative electrode slurry was coated on a copper foil, and dried and rolled to manufacture a negative electrode.

A polyethylene porous separator (thickness 20 µm) was prepared, and the separator/the positive electrode/the separator/the negative electrode were sequentially stacked to manufacture a unit cell.

### (Manufacturing of Battery)

Twenty unit cells were prepared, and 20 unit cells were sequentially stacked in a thickness direction to manufacture an electrode assembly. The electrode assembly was accommodated in a pouch-type battery case, an electrolyte solution was injected, and then the pouch-type battery case was sealed to complete the manufacture of a battery.

### Experimental Example 1: Measurement of Capacity

Each battery of Examples 1 to 2 and Comparative Example was charged at a current condition of 0.1C until reaching 3.65V in a charge-discharge chamber at 25°C, and discharged to 2.5V. At this time, the discharge capacity was measured, and the results are shown in Table 1.

### Experimental Example 2: Initial Efficiency of Battery

Each battery of Examples 1 to 2 and Comparative Example was charged to 4.0V under a charging condition of 0.1C at 25°C to confirm the charge capacity, and then continuously discharged to 2.5V under a discharging condition of 0.1C at the same temperature to confirm the discharge capacity. In addition, the percentage of the discharge capacity relative to the charge capacity at this time was calculated as initial efficiency, and the results are shown in Table 1.

**[Table 1]**

| | Discharge Capacity (Ah) | Initial Efficiency (%) |
|---|---|---|
| Example 1 | 29.1 | 89 |
| Example 2 | 31.0 | 90 |
| Comparative Example | 28.9 | 85 |

Referring to Table 1, it can be confirmed that the batteries according to the examples have superior capacity and initial efficiency compared to the battery according to the comparative example. In the batteries according to the examples, the capacity expression rate of the first positive electrode active material is 100% due to the presence of the first unit cell to which the first positive electrode active material is applied at 100%, whereas the battery of the comparative example is composed of unit cells including a positive electrode in which the first positive electrode active material and the second positive electrode active material are mixed, and it is determined that this is a result of a significant decrease in the capacity expression rate of the first positive electrode active material.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. A lithium secondary battery, comprising: a battery case; and an electrode assembly accommodated inside the battery case,
wherein the electrode assembly comprises a unit cell stack in which n (n is an integer of 2 or more) unit cells comprising a positive electrode and a negative electrode are arranged in a thickness direction,
the unit cell stack comprises a first unit cell and a second unit cell,
the first unit cell comprises a first positive electrode, and
a positive electrode active material of the first positive electrode is composed of a first positive electrode active material represented by the following Chemical Formula 1:
[Chemical Formula 1] LiₚFe_{(1-q)}M¹_{q}O₄
In Chemical Formula 1, M¹ is any one of W, Cu, V, Cr, Ti, Zr, Zn, Al, In, Ta, Y, La, Sr, Ga, Sc, Gd, Sm, Ca, Ce, Nb, Mg, B, and Mo, and
p and q are 5≤p≤7 and 0≤q≤0.5, respectively.

2. The lithium secondary battery of claim 1, wherein the second unit cell comprises a second positive electrode, and the second positive electrode comprises, as a positive electrode active material, a second positive electrode active material of a different type from the first positive electrode active material.

3. The lithium secondary battery of claim 1, wherein the second unit cell comprises a second positive electrode, and the second positive electrode comprises, as a positive electrode active material, lithium iron phosphate having an olivine structure containing an iron element.

4. The lithium secondary battery of claim 2 or claim 3, wherein the second positive electrode does not comprise the first positive electrode active material as a positive electrode active material.

5. The lithium secondary battery of claim 1, wherein the first unit cell is disposed at a center based on a thickness direction (Z direction) in the unit cell stack.

6. The lithium secondary battery of claim 1, wherein in the Chemical Formula 1, M¹ is any one of Ti, Zr, Al, Y, Sc, Nb, and Mg, and p and q are 5.5≤p≤6.5 and 0≤q≤0.2, respectively.

7. The lithium secondary battery of claim 1, wherein the first unit cell and/or the second unit cell is any one of a mono-cell having a separator/negative electrode/separator/positive electrode structure, a bi-cell having a separator/negative electrode/separator/positive electrode/separator/negative electrode structure, and a bi-cell having a separator/positive electrode/separator/negative electrode/separator/positive electrode structure.

8. The lithium secondary battery of claim 1, wherein the electrode assembly further comprises a half-cell having a separator/negative electrode/separator structure or a half-cell having a separator/positive electrode/separator structure, and
the half-cell is disposed at an outermost side based on a thickness direction (Z direction) of the electrode assembly.

9. The lithium secondary battery of claim 1, wherein in the unit cell stack, a ratio of the number of the first unit cells to a total number of unit cells is 20% or less.

10. The lithium secondary battery of claim 1, wherein in the unit cell stack, a ratio of a thickness of the first unit cell to a total thickness of the unit cell stack is 20% or less.

11. The lithium secondary battery of claim 1, wherein the first unit cell is disposed at each of a lower portion, a center, and an upper portion based on a thickness direction (Z direction) in the unit cell stack.

12. The lithium secondary battery of claim 1, wherein the electrode assembly is any one of a stack type, a stack and folding type, and a lamination and stack type.

13. A battery module comprises the lithium secondary battery of claim 1.

14. A battery pack comprises the lithium secondary battery of claim 1.
